# EUROPEAN PATENT SPECIFICATION

(11) **EP 1 574 729 B1**
(45) Date of publication and mention of the grant of the patent: **21.07.2010**
(21) Application number: 03780840.9
(22) Date of filing: 17.12.2003
(51) Int. Cl.: F16C 33/66

(54) **Double-row angular contact ball bearing in tandem arrangement whereby the flow of lubricant passing through the bearing is controlled by the cage**
Zweireihiges Schrägkugellager in Tandemanordnung mit einem durch den Käfig regulierten Schmiermittelfluss durch das Lager
Roulement à contact oblique à deux rangées de billes en tandem dans lequel le débit du lubrifiant traversant le palier est réglé par le cage

(30) Priority: 19.12.2002 JP 2002367722; 03.02.2003 JP 2003025547
(43) Date of publication of application: 14.09.2005
(73) Proprietor: JTEKT Corporation, Osaka-shi Osaka 542-8502 (JP)
(72) Inventor: Yokota, Kunihiko, Osaka-shi, Osaka 542-0082 (JP); Nakashita, Tomonori, Osaka-shi, Osaka 542-0082 (JP); Tadumi, Hajime, Osaka-shi, Osaka 542-0082 (JP); Ogino, Kiyoshi, Osaka-shi, Osaka 542-0082 (JP); Ueda, Hideo, Osaka-shi, Osaka 542-0082 (JP); Kawaguchi, Toshihiro, Osaka-shi, Osaka 542-0082 (JP)
(74) Representative: Steinmeister, Helmut
(86) International application number: PCT/JP2003/016173
(87) International publication number: WO 2004/057202

(56) References cited:
- EP-A- 1 498 621
- WO-A-85/03749
- DE-A1- 19 839 481
- DE-U- 1 892 455
- JP-A- 3 129 121
- JP-A- 9 303 407
- JP-B1- 43 004 721
- JP-B1- 44 026 242
- JP-U- 6 056 520
- JP-U- 63 103 017
- US-A- 2 019 464
- US-A- 4 345 799
- PATENT ABSTRACTS OF JAPAN vol. 2000, no. 11, 3 January 2001 (2001-01-03) -& JP 2000 220647 A (NTN CORP), 8 August 2000 (2000-08-08)
- PATENT ABSTRACTS OF JAPAN vol. 004, no. 037 (M-004), 27 March 1980 (1980-03-27) & JP 55 010140 A (NIPPON SEIKO KK), 24 January 1980 (1980-01-24)

## Description

### 1. Field of the invention

The present invention relates to a ball bearing used for a differential mechanism or the like which is mounted on, for example a vehicle.

### 2. Description of the prior art

The DE 198 39 481.0, which represents the closest prior art, discloses a bearing arrangement for a pinion shaft, comprising two double row angular contact ball bearings having rings with large diameter raceways and a small diameter raceways, with the features of the preamble of claim 1.

EP 1 403 539 A, which represents state of the art according to Art. 54 (3) EPC, also discloses a ball bearing of the above kind.

Document US-2,368,963 A discloses a bearings arrangement for a pinion shaft with two tapered roller bearings wherein a small radial gap is defined on the entry side of the bearings by a radial extending part of the housing or a ring inserted in the housing to restrict the oil flow.

The WO85/03749 discloses a double row angular contact ball bearing allowing a unilateral loading. To obtain this capacity, a plurality of measures is proposed.

The EP 1 498 621 which is filed but not published before the present priority date discloses a similar ball bearing supporting a pinion shaft. The bearing is provided with rings with small diameter raceways and large diameter raceways for the balls.

The US 2,019,464 discloses another bearing for a pinion shaft supported by bearings having tapered rollers or balls.

The JP 55010140 A discloses a lubricating rolling bearing having a cage which is made of porous material.

The DE 1 892 455 U discloses a ball bearing having a comb cage provided with a lip at the edge of the annular portion of the cage.

A pinion shaft of a differential mechanism mounted on a vehicle is rotatably supported by means of a tapered roller bearing at its both sides in an axial direction. If the pinion shaft is supported by means of the tapered roller bearing, running torque is increased, so that efficiency of the differential mechanism may be deteriorated. For this reason, a technology for supporting the pinion shaft by means of a double row ball bearing has been proposed as disclosed in Japanese Patent Application No. 2002-117091 which was published as JP 2003 314 541 A and which is the oldest priority of EP 1 498 621 A.

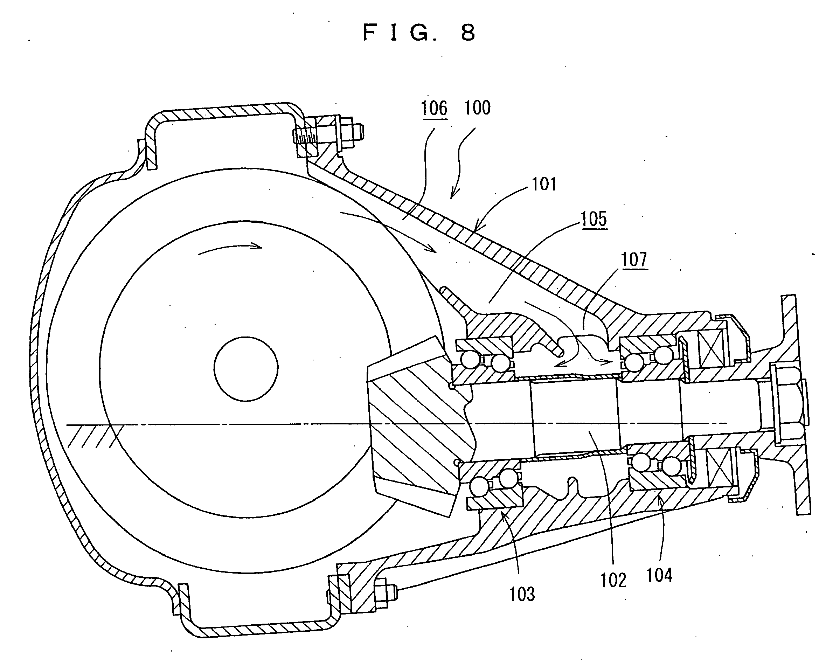

Fig. 8 is a cross sectional view of a differential mechanism 100 which employs a double row ball bearing for supporting a pinion shaft. The pinion shaft 102 which is rotatably supported about a shaft center by a pair of ball bearings 103 and 104 is housed within a differential retaining shield 101 of the differential mechanism 100. The ball bearings 103 and 104 have a configuration in which PCDs (Pitch Circle Diameter) of balls of each row, inner and outer ring raceway diameters thereof are different, and are called a tandem type double row ball bearing.

Incidentally, when the pinion shaft begins to rotate, oil in the differential retaining shield 101 reaches an oil outlet port 107 from an oil inlet port 106 of an oil circuit 105, is led so as to be supplied to an upper part of the ball bearings 103 and 104, and circulates within the differential retaining shield 2 so as to lubricate the ball bearings 103 and 104.

As described above, when the oil is introduced into the ball bearings 103 and 104, since the ball bearings 103 and 104 are the tandem type ball bearings and the pinion shaft rotates about the shaft center, there is high possibility that a large amount of oil among the oil supplied between bearing rings in the ball bearings 103 and 104 will be supplied into the ball bearings 103 and 104.

### Summary of the Invention

A double row ball bearing of the present invention comprises the features of claim 1.

In the so-called tandem type double row ball bearing provided with the raceway surfaces with the different diameters in the inner and outer ring members as above configuration, it has been difficult to restrict the amount of lubricant in particular, but according to an easy configuration of arranging the annular portion of the cage between the shoulder portions of the inner and outer ring members via the clearance having the radial fine dimension, the lubricant can be supplied between the outer ring member and the inner ring member as much amount as needed, thereby making it possible to certainly lubricate the inside of the ball bearing in a state of suppressing an increase in torque.

Moreover, an axial end face on a side of the raceway surface with large diameter of said outer ring member is axially closely positioned to the side of the raceway surface with small diameter of said inner ring member compared with an axial end face of a side of the raceway surface with large diameter of said inner ring member.

In a configuration where the axial end face on the side of the raceway surface with large diameter of the outer ring member is axially closely positioned to the side of the raceway surface with small diameter of the inner ring member compared with the axial end face of the side of the raceway surface with large diameter of said inner ring member as described above, since a side of the ball which fits between raceway surfaces with large diameter is widely opened, the lubricant is discharged outside the bearing smoothly and in a short time, so that foreign materials, such as metal abrasion powder, are also quickly discharged with the lubricant.

Incidentally, a line of action of a bearing portion on a side of the raceway surface with large diameter in this ball bearing is inclined towards a bearing portion on the side of the raceway surface with small diameter.

According to this configuration, even when the side of the ball which fits between the raceway surfaces with large diameters is widely opened, functions as the bearing, such as weight load capacity or the like can not be deteriorated.

### BRIEF DESCRIPTION OF THE DRAWINGS

Fig. 1 is a cross sectional view showing an entire configuration of a differential mechanism in an embodiment of the present invention;
Fig. 2 is an expanded cross sectional view of a principal part in Fig. 1;
Fig. 3 is an expanded cross sectional view showing a first double row ball bearing in Fig. 1;
Fig. 4 is a partial front view of the first double row ball bearing in Fig. 1;
Fig. 5 is an expanded cross sectional view of a principal part in another embodiment;
Fig. 6 is an expanded cross sectional view showing a first double row ball bearing in Fig. 5;
Fig. 7 is an expanded cross sectional view showning another embodiment of a first double row ball bearing; and
Fig. 8 is a cross sectional view showing an entire configuration of a conventional differential mechanism.

### DETAILED DESCRIPTION OF THE PREFERRED EMBODIMENTS

Hereinafter, description will be made of a ball bearing of the present invention based on drawings taking an example of a tandem type double row ball bearing which is applied to a bearing for supporting a pinion shaft of a differential mechanism mounted on a vehicle.

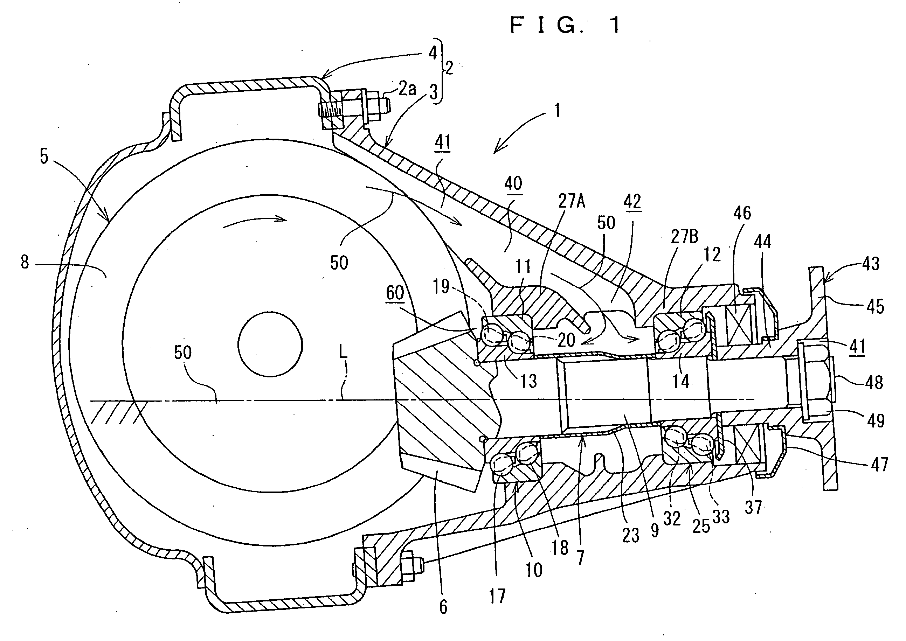

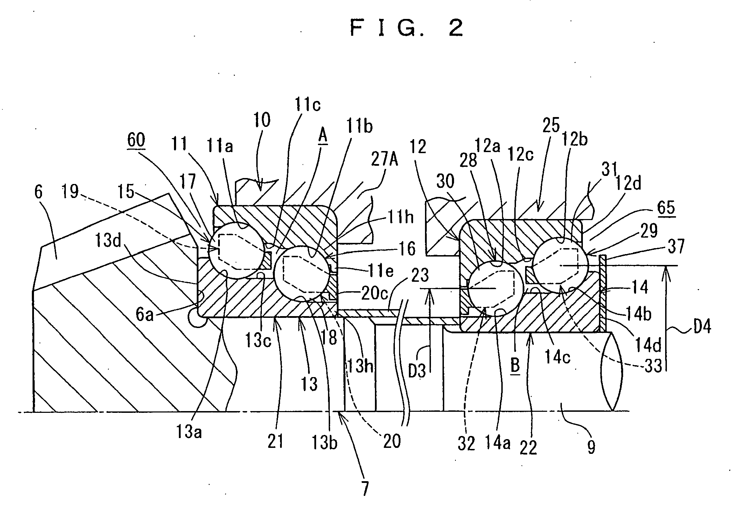

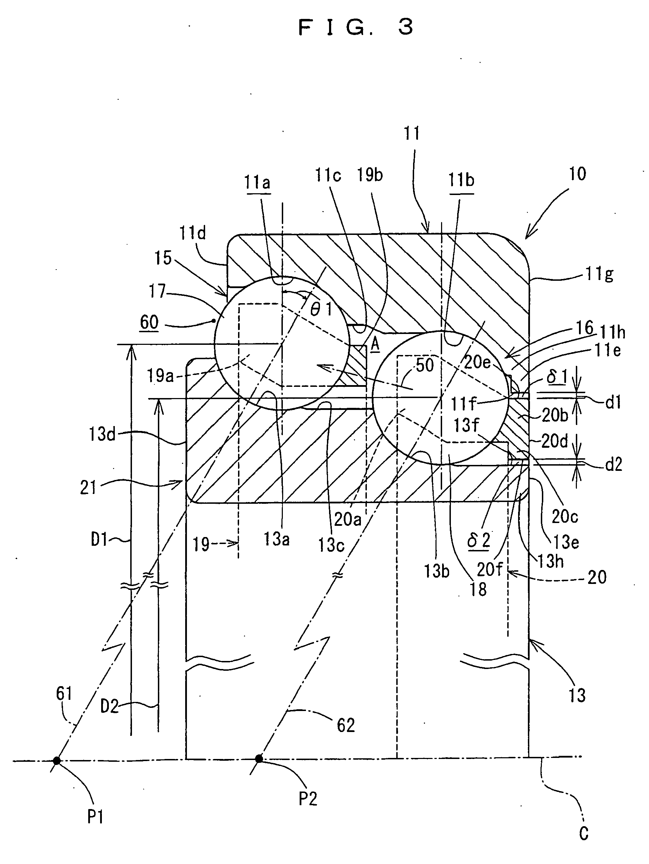

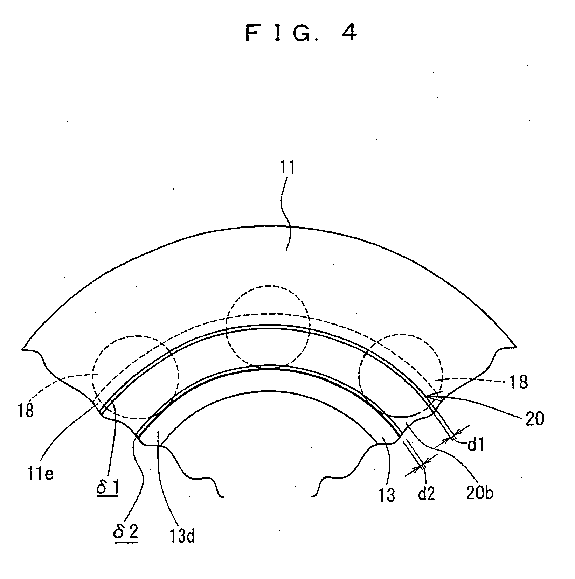

Fig. 1 is an entire cross sectional view showing a rough configuration of a differential mechanism, Fig. 2 is an expanded cross sectional view of a principal part thereof, Fig. 3 is a cross sectional view of a first double row ball bearing where a part shown in Fig. 2 is further expanded, and Fig. 4 is a partial front view of the first double row ball bearing.

Description will be made of an entire configuration of a differential mechanism 1. As shown in Fig. 1, the differential mechanism 1 comprises a differential retaining shield 2. The differential retaining shield 2 consists of a front case 3 and a rear case 4. Both cases 3 and 4 are fixed by a bolt nut 2a. Annular walls 27A and 27B for mounting bearings are formed inside the front case 3. The differential retaining shield 2 houses a differential transmission mechanism 5 for differentially interlocking right and left wheels, and a pinion shaft 7 having a pinion gear 6 on one side. The pinion gear 6 is engaged with a ring gear 8 of the differential transmission mechanism 5. A shaft portion 9 of the pinion shaft 7 is formed in a step shape so that the further the other side is, the smaller the diameter thereof may become as compared with that of one side.

The shaft portion 9 of the pinion shaft 7 is rotatably supported by the annular wall 27A on one side (pinion side) via a first double row angular contact ball bearing 10 (it is called a first ball bearing) . The shaft portion 9 of the pinion shaft 7 is rotatably supported by the annular wall 27B on the other side (a counter pinion side which is a side opposite to the pinion side) via a second double row angular contact ball bearing 25 (it is called a second ball bearing) .

An oil circuit 40 is formed between an outer wall of the front case 3 and the annular wall 27A on the pinion side. An oil inlet port 41 of the oil circuit 40 is opened to the ring gear 8 side of the oil circuit 40. An oil outlet port 42 of the oil circuit 40 is opened to a portion between the annular walls 27A and 27B. Oil 50 is stored at a level L in the differential retaining shield 2 in a shutdown state.

As shown in Fig. 2, the first ball bearing 10 comprises a single first outer ring member 11 having an outer ring raceway surface with major diameter 11a on the pinion side and an outer ring raceway surface with minor diameter 11b on the counter-pinion side, and a first attachment 21. The first ball bearing 10 is comprised by means of axially attaching the first attachment 21 to the first outer ring member 11 from the pinion side toward the counter-pinion side.

The first outer ring member 11 is fitted to an inner radius surface of the annular wall 27A. A counter-bored outer ring is employed as the first outer ring member 11. A plane portion 11c which has a diameter larger than that of an outer ring raceway surface with minor diameter 11b and extends to the outer ring raceway surface with major diameter 11a is formed between the outer ring raceway surface with major diameter 11a and the outer ring raceway surface with minor diameter 11b of the first outer ring member 11. According to the configuration described above, an inner peripheral surface of the first outer ring member 11 is formed in a step shape.

An annular piece 11e, which radially projects inwardly, namely towards the first inner ring member 13 side, is integrally formed with a shoulder portion 11h of the first outer ring member 11 on the counter-pinion side.

The first attachment 21 comprises the single first inner ring member 13 having an inner ring raceway surface with major diameter 13a radially opposing to the outer ring raceway surface with major diameter 11a of the first outer ring member 11 and an inner ring raceway surface with minor diameter 13b radially opposing to the outer ring raceway surface with minor diameter 11b, a set of balls 15 in a major diameter side on the pinion side and a set of balls 16 in a minor diameter side on the counter-pinion side, and cages 19 and 20 for holding the balls 17 and 18 comprising each set of balls 15 and 16 in equally distributed positions in a circumferential direction. The pinion shaft 7 is inserted in the first inner ring member 13.

An end face on the pinion side 13d in the first inner ring member 13 contacts an end face 6a of the pinion gear 6 from an axial direction, and the first inner ring member 13 is axially disposed between the end face 6a of the pinion gear 6 and a plastic spacer 23 for preload setting attached outside in the middle of the shaft portion 9 of the pinion shaft 7.

A plane portion 13c which has a diameter larger than that of the inner ring raceway surface with minor diameter 13b and extends to the inner ring raceway surface with major diameter 13a is formed between the inner ring raceway surface with major diameter 13a and the inner ring raceway surface with minor diameter 13b of the first inner ring member 13. According to this configuration, an outer peripheral surface of the first inner ring member 13 is formed in a step shape.

As shown in Fig. 3 and Fig. 4, in the first ball bearing 10, a diameter of the ball 17 in the set of balls 15 in the major diameter side and a diameter of the ball 18 in the set of balls 16 in the minor diameter side are equally formed, and pitch circle diameters D1 and D2 corresponding to each set of balls 15 and 16 are different, respectively. That is, the pitch circle diameter D1 of the set of balls 15 in the major diameter side is set larger than the pitch circle diameter D2 of the set of balls 16 in the minor diameter side. The first ball bearing 10 which has the sets of balls 15 and 16 whose pitch circle diameters D1 and D2 are different like this is called the tandem type double row ball bearing.

In the first ball bearing 10, an end face on the pinion side 11d of the first outer ring member 11, namely an axial end face on the side of the raceway surface with major diameter is closely located to the side of the raceway surface with minor diameter 13b of the first inner ring member 13 (counter-pinion side) along the axial direction as compared with the end face on the pinion side 13d of the first inner ring member 13, namely, an axial end face of the side of the raceway surface with major diameter.

According to this configuration, the pinion side of the ball 17 in the set of balls 15 on the major diameter side is widely opened, so that it is used as annular discharge space 60 for discharging the oil 50.

Both lines of action 61 and 62 in the first ball bearing 10 face in the same direction. In other words, both points of application P1 and P2 are closely located to the pinion side with respect to an axial center of the first ball bearing 10. Incidentally, θ1 represents a contact angle between a radial plane vertical to a bearing axis C and the line of action 61 of resultant force of forces transmitted to the ball 17 by means of the raceway surfaces 11a and 13a of the first outer ring member 11 and the first inner ring member 13 in a bearing portion on the pinion side (on the side of the raceway surface with major diameter) of the first ball bearing 10. As will be obvious from such line of action 61, even when the end face on the pinion side 11d of the outer ring member 11 is located on the side of the raceway surface with minor diameter 13b as compared with the end face on the pinion side 13d of the inner ring member 13, functions as the bearing, such as weight load capacity, of the first ball bearing 10 are not deteriorated.

The second ball bearing 25 comprises a single second outer ring member 12 having an outer ring raceway surface with small diameter 12a on the pinion side and an outer ring raceway surface with major diameter 12b on the counter-pinion side, and a second attachment 22 as shown in Fig. 2. The second ball bearing 25 is comprised by axially attaching the second attachment 22 to the second outer ring member 12 from the counter-pinion side toward the pinion side.

In the second outer ring member 12, a plane portion 12c which has a diameter larger than that of the outer ring raceway surface with small diameter 12a and extends to the outer ring raceway surface with major diameter 12b is formed between the outer ring raceway surface with major diameter 12b and the outer ring raceway surface with small diameter 12a.

According to this configuration, the inner peripheral surface of the second outer ring member 12 is formed in a step shape. The second outer ring member 12 is fitted to an inner peripheral surface of the annular wall 27B.

The second attachment 22 comprises a single second inner ring member 14 having an inner ring raceway surface with small diameter 14a radially opposing to the outer ring raceway surface with small diameter 12a of the second outer ring member 12, and an inner ring raceway surface with major diameter 14b radially opposing to the outer ring raceway surface with major diameter 12b, a set of balls 28 in a small diameter side on the pinion side and a set of balls 29 in a major diameter side on the counter-pinion side, and cages 32 and 33 for holding the balls 30 and 31 comprising each set of balls 28 and 29 in equally distributed positions in the circumferential direction. A stepped inner ring is used as the second inner ring member 14. The pinion shaft 7 is inserted in the second inner ring member 14, and the second inner ring member 14 is axially disposed between the plastic spacer 23 for preload setting and a shield plate 37.

A plane portion 14c which has a diameter smaller than that of the inner ring raceway surface with major diameter 14b and extends to the inner ring raceway surface with minor diameter 14a is formed between the inner ring raceway surface with minor diameter 14a and the inner ring raceway surface with major diameter 14b. According to this configuration, an outer peripheral surface of the first inner ring member 14 is formed in a step shape.

In the second ball bearing 25, a diameter of the ball 30 in the set of balls 28 in the minor diameter side and a diameter of the ball 31 in the set of balls 29 in the major diameter side are equally formed, pitch circle diameters D3 and D4 corresponding to each set of balls 28 and 29 are different, respectively. That is, the pitch circle diameter D3 of the set of balls 28 in the major diameter side is set smaller than the pitch circle diameter D4 of the set of balls 29 in the minor diameter side. This second ball bearing 25 is also the tandem type double row ball bearing.

In the second ball bearing 25, an end face on the counter-pinion side 12d of the second outer ring member 12, namely, an axial end face on the side of the raceway surface with major diameter is closely located to a side of the raceway surface with minor diameter (pinion side) of the inner ring member 22 along the axial direction compared with an end face on the counter-pinion side 14d of the second inner ring member 22, namely, an axial end face on a side of the raceway surface with major diameter.

According to this configuration, the counter-pinion side of the ball 31 in the set of balls 29 in the major diameter side is widely opened to thereby form an annular discharge space 65 for discharging the oil 50. Incidentally, a direction of inclination of a line of action (not shown) in the second ball bearing 25 is a reverse direction of inclination with respect to the lines of action 61 and 62 in the first ball bearing 10.

Since a configuration of each of the cages 19 and 20 in the first ball bearing 10 and a configuration of each of the cages 32 and 33 in the second ball bearing 25 have similar figures having different diameters and axially facing to opposite directions, description will be made of the configuration of each of the cages 19 and 20 in the first ball bearing 10 as a representative example, hereinafter.

Incidentally, since the oil outlet port 42 of the oil circuit 40 is opened between the annular walls 27A and 27B, it is configured that the oil 50 used for bearing lubrication supplied from the oil outlet port 42 of the oil circuit 40 first hits the cages 20 and 32 of an axial inside (the inside with reference to the axial direction) among each of the cages 19 and 20 in the first ball bearing 10 and the cages 32 and 33 in the second ball bearing 25.

A cage so called a snap cage is used as each of the cages 19 and 20 in the first ball bearing 10, and the cages 32 and 33 in the second ball bearing 25.

As shown in Fig. 3, the cages 19 and 20 comprises pocket portions 19a and 20a each housing the balls 17 and 18, and annular portions 19b and 20b integrally formed on the counter-pinion side of these pocket portions 19a and 20a.

The counter-pinion side among the cages 19 and 20, that is, the annular portion 20b of the cage 20 which holds the ball 18 in the set of balls 16 in the minor diameter side is arranged between shoulder portions 11h and 13h of the first outer ring member 11 and the first inner ring member 13. An annular baffle piece 20c which radially projects inwardly (on the side of the shoulder portion 13h of the first inner ring member 13) is formed in the annular portion 20b.

A first annular clearance δ1 is formed between an outer peripheral surface 20e of the annular portion 20b of the cage 20 and an inner peripheral surfaces 11f of the annular piece 11e formed in an inner peripheral portion of the shoulder portion 11h of the first outer ring member 11.

A second annular clearance δ2 is formed between an inner peripheral surface 20f of the baffle piece 20c and an outer peripheral surfaces 13f of the shoulder portion 13h of the first inner ring member 13.

Radial widths d1 and d2 of the first annular clearance δ1 and the second annular clearance δ2 are fine clearances set to be larger than "0" and 0.15 times or less of a diameter of the balls 17 and 18, respectively.

An end face on the counter-pinion side 11g of the first outer ring member 11, an end face of the counter-pinion side 13e of the first inner ring member 13, and an end face on the counter-pinion side 20d in the annular portion 20b of the cage 20 are substantially positioned on the same radial surface, respectively.

As described above, since the configuration of each of the cages 19 and 20 in the first ball bearing 10 and the configuration of the cages 32 and 33 in the second ball bearing 25 have similar figures having different diameters and axially facing to opposite directions, description of the cages 32 and 33 in the second ball bearing 25 will be omitted.

As shown in Fig. 1, the differential mechanism 1 comprises a companion flange 43. The companion flange 43 comprises a shank portion 44 and a flange portion 45 integrally formed with the shank portion 44. The shank portion 44 is attached outside a drive shaft (not shown) of the shaft portion 9 of the pinion shaft 7.

A shield plate 37 is interposed between an end face on the pinion side of the shank portion 44 and the end face on the counter-pinion side 14d of the second inner ring member 14. An oil seal 46 is arranged between an outer peripheral surface of the shank portion 44 and an inner peripheral surface of an opening on the counter-pinion side of the front case 3. A seal protection cup 47 for covering the oil seal 46 is fixed to the opening on the counter-pinion side of the front case 3. A threaded portion 48 is formed in a heel on the counter-pinion side of the shaft portion 9. The threaded portion 48 projects to a central female portion 41 of the flange portion 45. A nut 49 is screwed on the threaded portion 48.

The nut 49 is screwed on the threaded portion 48 like this, so that the first inner ring member 13 of the first ball bearing 10 and the second inner ring member 14 of the second ball bearing 25 are axially inserted between an end face of the pinion gear 6 and an end face of the companion flange 43, thereby making it in a state where a predetermined preload is given to the balls 17 and 18 of the first ball bearing 10 and the balls 30 and 31 of the second ball bearing 25 via the shield plate 37 and the plastic spacer 23.

In the above configuration, the oil 50 is flipped up with a rotation of the ring gear 8 in operation, is led so as to be supplied to an upper part of the first ball bearing 10 and the second ball bearing 25 through the oil circuit 40 within the front case 3, and circulates through within the differential retaining shield 2 so as to lubricate the first ball bearing 10 and second ball bearing 25.

Incidentally, when the oil 50 is supplied into the first ball bearing 10 as described above, the oil 50 in question flows through an annular space A between the first outer ring member 11 and the first inner ring member 13 at high speed compared with that of a normal double row ball bearing which is not a tandem type, so that there is generated a phenomenon in which the oil is discharged from an inside of the bearing in a short time. Thus, unless the oil 50 is supplied, it would be easy to fall in a poor lubricating state in this kind of double row ball bearing. However, since it is in a state where the oil 50 is sequentially supplied, such poor lubricating state will not happen. Conversely, a situation of a torque increase can be considered by the oil 50 being supplied too much into the bearing.

However, in a case of this embodiment, the above first and second annular clearances δ1 and δ2 are provided, and the radial widths d1 and d2 of the first and second clearances δ1 and δ2 are set to be larger than 0 and 0.15 times or less of the diameter of the balls 17, respectively. Therefore, the amount of oil 50 supplied into the annular space A is suppressed particularly by the annular piece 11e and the baffle piece 20c.

Thus, the oil 50 will be supplied into the annular space A as much amount as needed from the first and second annular clearances δ1 and δ2, and the supplied oil 50 moves to the pinion side within the annular space A. The increase in torque is therefore suppressed, thereby making it possible to certainly lubricate the inside of the bearing by the oil 50 as much amount as needed.

According to the embodiment of the present invention, the pinion side of the ball 17 in the set of balls 15 in the major diameter side is widely opened to form the annular discharge space 60, so that the oil 50 supplied into the annular space A will be discharged outside the first ball bearing 10 from the discharge space 60 quickly and smoothly.

Accordingly, even when metal abrasion powder would be mixed in the oil 50, this will be quickly discharged outside the first ball bearing 10 from the discharge space 60 with the oil 50. Thereby, making it possible to suppress to the minimum generation of indentation to the inner and outer ring raceway surfaces 11a, 13a, 11b, and 13b caused by the metal abrasion powder.

In a case of the second ball bearing 25, since a flow direction of the oil 50 only becomes an opposite direction (from the pinion side to the counter-pinion side) to that in the case of the first ball bearing 10, the oil 50 supplied into an annular space B of the second ball bearing 25 certainly lubricates with the sufficient amount of oil 50 for lubrication, and moves within the annular space B. Accordingly, even when metal abrasion powder would be mixed in the oil 50, the metal abrasion powder is quickly discharged outside from the discharge space 65 with the oil 50. Thereby, making it possible to suppress to the minimum generation of indentation to the inner and outer ring raceway surfaces 12a, 14a, 12b, and 14b caused by the metal abrasion powder.

In this embodiment, the first ball bearing 10 with small frictional resistance is used as the ball bearing on the pinion gear 6 side to which a heavy load is applied compared with that on the counter-pinion side. Accordingly, running torque thereof becomes smaller compared with that of the tapered roller bearing having been conventionally used, thereby making it possible to improve efficiency of the differential mechanism 1. Furthermore, by means of using not a single row ball bearing but a double row ball bearing, it is possible to increase load carrying capacity compared with the single row ball bearing, thereby obtaining sufficient support rigidity.

In addition to that, there is used the tandem type first ball bearing 10 as the first ball bearing 10, in which the pitch circle diameter D1 of the set of balls 15 in the major diameter side on the pinion gear 6 side is enlarged compared with the pitch circle diameter D2 of the set of balls 16 in the minor diameter side, so that it is possible to increase the number of balls 17 in the set of balls 15 in the major diameter side on the pinion gear 6 side to which heavier load is applied if the balls 17 and 18 in both rows have the same diameter, thereby making it possible to endure the heavy load.

In each embodiment described above, shapes of both the first outer ring member 11 and the cage 20 in the first ball bearing 10 are changed, so that it is configured so as to reduce an area of a space formed between the shoulder portion 11 h of the inner and outer ring members 11 and 13 and an edge section of the cage 20, but it is not limited to this.

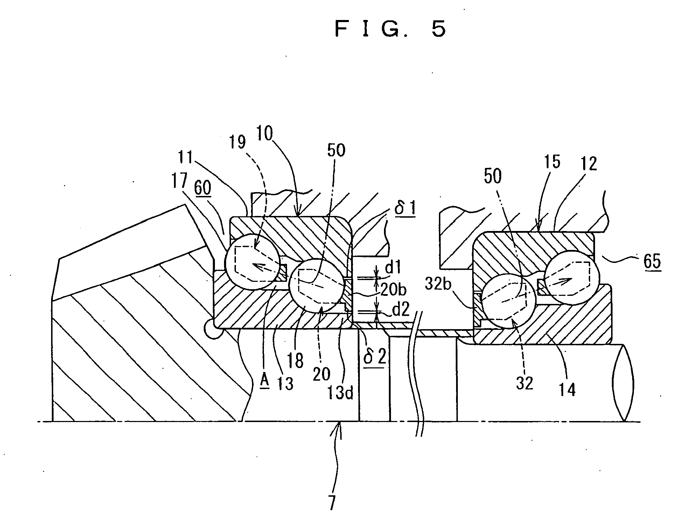

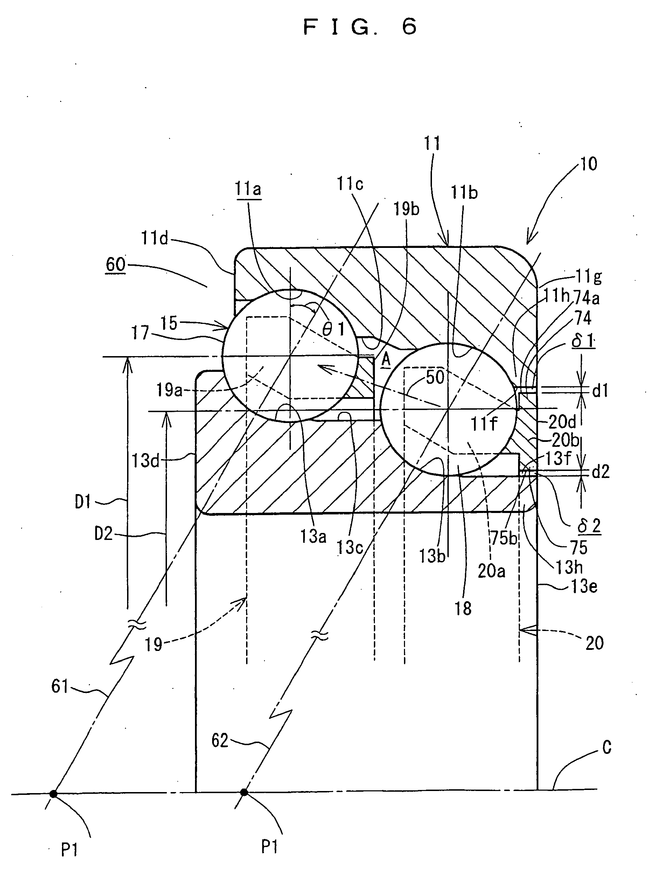

For example, Fig. 5 and Fig. 6 are expanded sectional views of a principal part in another embodiment of the present invention. In this embodiment, in the first ball bearing 10 and the second ball bearing 25 which rotatably support the pinion shaft 7 about a shaft center, the annular portions 20b and 32b of the cages 20 and 32 of the axial inside are radially expanded inwardly and outwardly, so that it is configured so as to reduce the area of the space formed between shoulder portions of the inner and outer ring members 11, 13, 12, and 14, and the annular portions 20b and 32b of the cages 20 and 32.

When making description specifically on the side of the first ball bearing 10, the baffle pieces 74 and 75 which radially project inwardly and outwardly are provided in the annular portion 20b of the cage 20 on the counter-pinion side among the cages 19 and 20.

The first annular clearance δ1 is formed between an outer peripheral surface 74a of the baffle piece 74 and the inner peripheral surface 11f of the edge section of the shoulder portion 11h on the counter-pinion side of the first outer ring member 11. The second annular clearance δ2 is formed between an inner peripheral surface 75b of the baffle piece 75 of the annular portion 20b formed in the cage 20 and the outer peripheral surfaces 13f of the shoulder portion 13h of the first inner ring member 13.

The radial widths d1 and d2 of the first and second annular clearances δ1 and δ2 are set to be larger than 0 and 0.15 times or less of the diameter of the balls 17 and 18, respectively.

The end face on the counter-pinion side 11g of the first outer ring member 11, the end face on the counter-pinion side 13e of the first inner ring member 13, and the end face on the counter-pinion side 20d in the annular portion 20b of the cage 20 are substantially positioned on the same radial surface, respectively. Since other configurations are similar to those of the embodiment described above, the same symbols are given thereto and description thereof will be omitted.

According to this configuration, the amount of oil 50 supplied into the annular space A is suppressed by the baffle pieces 74 and 75 formed in the annular portion 20b of the cage 20, so that the oil 50 is supplied into the annular space A from the first and second annular clearances δ1 and δ2 as much amount as needed. The supplied oil 50 then moves to the pinion side within the annular space A to certainly lubricate the inside of the bearing by the oil 50.

Moreover, even when metal abrasion powder would be mixed in the oil 50, it is quickly discharged outside the first ball bearing 10 from the discharge space 60 with the oil 50, thereby, making it possible to suppress to the minimum generation of indentation to the inner and outer ring raceway surfaces 11a, 13a, 11b, and 13b caused by the metal abrasion powder.

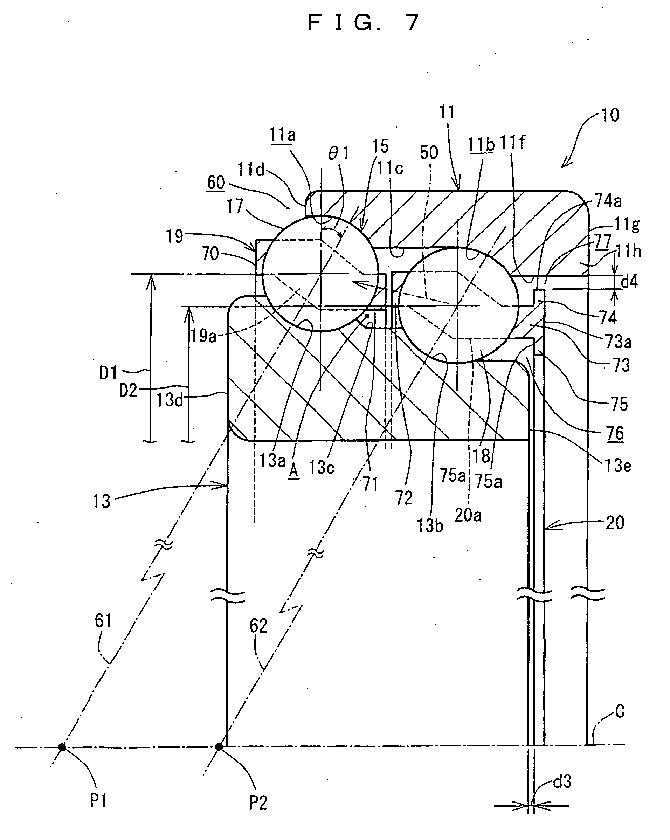

Fig. 7 is an expanded cross sectional view of the first ball bearing 10 further showing another embodiment of the present invention. In this first ball bearing 10, a machined cage is used as the cages 19 and 20 which are formed by cutting processing, respectively. The cages 19 and 20 comprise annular portions 70 and 71, and 72 and 73 on both sides of the axial direction of the pockets 19a and 20a, respectively. Among the cages 19 and 20, an axial inside in the cage 20 on the counter-pinion side, namely, the annular portion 73 on the counter-pinion side comprises baffle pieces 74 and 75 which radially project inwardly and outwardly, and is formed in T section.

These baffle pieces 74 and 75 are closely positioned further to the counter-pinion side rather than the end face on the counter-pinion side 13e of the first inner ring member 13, and a clearance 76 having a predetermined axial width d3 is provided between the end face on the counter-pinion side 13e of the first inner ring member 13 and the pinion side end face 75a of the baffle piece 75 according to this configuration. A clearance 77 having a predetermined radial width d4 is provided between the outer peripheral surface 74a of the baffle piece 74 on a radial outside and the inner peripheral surface 11f of the shoulder portion 11h on the counter-pinion side of the first outer ring member 11.

An end face on the counter-pinion side 73a in the annular portion 73 on the counter-pinion side of the cage 20 is positioned on the pinion side with respect to the end faces on the counter-pinion side 11g of the first outer ring member 11.

Thus, the first outer ring member 11 is positioned on the counter-pinion side with respect to the first inner ring member 13, so that the pinion side of the ball 17 in the set of balls 15 in the major diameter side is widely opened. This opened portion is utilized as the annular discharge space 60 for discharging the oil 50. Since other configurations are similar to those of each embodiment described above, the same symbols are given thereto and description thereof will be omitted.

According to the configuration described above, the pinion shaft 7 rotates about the shaft center, the oil 50 is flipped with a rotation of the ring gear 8, the oil 50 is led so as to be supplied to an upper part of the first and second ball bearings 10 and 25 through the oil circuit 40, and circulates within the differential retaining shield 2 so as to lubricate the first and second ball bearings 10 and 25.

Incidentally, an opening area on the counter-pinion side in the annular space A between the first outer ring member 11 and the first inner ring member 13 is reduced by the baffle pieces 74 and 75 formed in the annular portion 73 of the cage 20, so that the clearances 76 and 77 are formed, thereby the oil 50 is supplied into the annular space A from these clearances 76 and 77 with limitation of its amount.

Moreover, since the pinion side of the ball 17 in the set of balls 15 in the major diameter side is widely opened to form the annular discharge space 60, the oil 50 supplied into the annular space A will be discharged outside the first ball bearing 10 from the discharge space 60 quickly and smoothly.

The oil 50 of required and sufficient amount is thus supplied into the annular space A, and the oil 50 is subsequently quickly discharged outside the first ball bearing 10, thereby making it possible to suppress an increase in torque while the first inner ring member 13 rotates about the shaft center.

Moreover, even when metal abrasion powder would be mixed in the oil 50, this will be quickly discharged outside the first ball bearing 10 from the discharge space 60 with the oil 50. Thereby, making it possible to suppress to the minimum generation of indentation to the inner and outer ring raceway surfaces 11a, 13a, 11b, and 13b caused by the metal abrasion powder.

In a case of the second ball bearing 25, since the flow direction of the oil 50 only becomes the opposite direction to that of the first ball bearing 10, detailed description will be omitted.

Incidentally, in each embodiment described above, an example in which the first and second ball bearings 10 and 25 are used for the bearing for supporting the pinion shaft of the differential mechanism 1 of the vehicle is shown, but it is not limited to this. That is, it is applicable to a mechanism having a configuration where the bearing ring which is one component of the double row ball bearing is fixed to one side of the shaft or the housing, the other component of the double row ball bearing is attached to the other side of the shaft or the housing, and the shaft is inserted into the housing.

Incidentally, in the embodiment described above, description has been made of a case where the first and second ball bearings 10 and 25 of the tandem type have been used for an example of the differential mechanism 1, but it is not limited to this.

As will be obvious from the above description, according to the present invention, it is possible to supply a lubricant with required and sufficient amount into the ball bearing, thereby making it possible to certainly lubricate the inside of the ball bearing in a state of suppressing an increase in torque.

### Industrial Availability

According to the present invention, it can be applicable to the ball bearing used for the differential mechanism or the like which is mounted, for example on a vehicles.

## Claims

1. A double row ball bearing (10), comprising:
an inner ring member (13) having raceway surfaces (13a,13b) with different diameters on a large diameter side and a small diameter side;
an outer ring member (11) which is concentrically arranged with said inner ring member (13) and has raceway surfaces (11a,11b) with different diameters on the large diameter side and the small diameter side corresponding to each raceway surface (13a,13b) of said inner ring member (13);
double row balls (17,18) which are arranged between respective raceway surfaces (11a, 11b, 13a, 13b) of said inner ring member (13) and said outer ring member (11); and
cages (19,20) on the large diameter side and the small diameter side for holding said balls (17,18) in each row,
wherein the cage (20) on the small diameter side among said cages (19,20) comprises a pocket portion (19a,20a) for holding said balls (15,16), and an annular portion (19b,20b) integrally formed with this pocket portion (19a,20a) , and
wherein said annular portion (20b) of said cage (20) on the small diameter side is arranged between a shoulder portion of said inner ring member (13) and a shoulder portion of said outer ring member (13) via a respective clearance (δ1,δ2) having a radial fine dimension set to be larger than "0" and 0,15 times or less of a diameter of the balls (17) and (18), so as to control the amount of oil to be supplied into the annular space (A) between the inner ring member (13) and the outer ring member (11),
**characterized in that** the annular portion (20b) of the cage (20) on the small diameter side is provided with a baffle piece (20c, 75) extending toward the inner ring, while the cage (19) on the large diameter side is not provided with an annular baffle piece in its annular portion (19b) and is widely opened to define an annular discharge space (65).

2. A double row ball bearing according to claim 1, wherein a further baffle piece (11e,74) is provided either inwardly extending on the outer ring (11) or outwardly extending on the cage (20) on the small diameter side.

3. A double row ball bearing according to claim 1 or 2, wherein an axial end face on a side of the raceway surface (11a) with large diameter of said outer ring member (11) is axially closely positioned to the side of the raceway surface (13b) with small diameter of said inner ring member (13) compared with an axial end face of a side of the raceway surface (13a) with large diameter of said inner ring member (13).

4. A double row ball bearing according to claim 3, wherein a line of action of a bearing portion on the side of the raceway surface with large diameter is inclined towards a bearing portion on a side of the raceway surface with small diameter.

## Patentansprüche

1. Zweireihiges Kugellager (10), umfassend:
ein inneres Ringelement (13) mit Laufflächen (13a,13b) mit unterschiedlichen Durchmessern auf einer Seite großen Durchmessers und einer Seite kleinen Durchmessers;
ein äußeres Ringelement (11), das konzentrisch zu dem inneren Ringelement (13) angeordnet ist und Laufflächen (11a, 11b) mit unterschiedlichen Durchmessers auf der Seite großen Durchmessers und der Seite kleinen Durchmessers entsprechend der jeweiligen Lauffläche (13a,13b) des inneren Ringelements (13) aufweist;
doppelreihige Kugeln (17,18), die zwischen jeweiligen Laufflächen (11a, 11b, 13a, 13b) des inneren Ringelements (13) und des äußeren Ringelements (11) angeordnet sind; und
Käfige (19,20) auf der Seite großen Durchmessers und der Seite kleinen Durchmessers zum Halten der Kugeln (17,18) in jeder Reihe,
wobei der Käfig (20) auf der Seite kleinen Durchmessers zwischen den Käfigen (19,20) einen Taschenbereich (19a,20a) zum Halten der Kugeln (15,16) und einen ringförmigen Bereich (19b,20b) aufweist, der einteilig mit diesem Taschenbereich (19a,20a) ausgebildet ist, und
wobei der ringförmige Bereich (20b) des Käfigs (20) auf der Seite kleinen Durchmessers zwischen einem Schulterbereich des inneren Ringelements (13) und einem Schulterbereich des äußeren Ringelements (13) über einen entsprechenden Zwischenraum (δ1.δ2) angeordnet ist, dessen radiale Abmessung größer ist als "0" und dass 0,15-fache oder weniger eines Durchmessers der Kugeln (17 und 18) beträgt, zur Steuerung der Ölmenge, die in den ringförmigen Raum A zwischen dem inneren Ringelement (13) und dem äußeren Ringelement (11) zugeführt wird,
**dadurch gekennzeichnet, dass** der ringförmige Bereich (20d) des Käfigs (20) der Seite kleinen Durchmessers mit einem Umlenkstück (20c,75) versehen ist, das sich zum inneren Ring erstreckt, während der Käfig (19) auf der Seite großen Durchmessers nicht mit einem ringförmigen Umlenkstück in seinem ringförmigen Bereich (19b) versehen ist und weit geöffnet ist, zur Begrenzung eines ringförmigen Auslassraums (65).

2. Zweireihiges Kugellager gemäß Anspruch 1, bei welchem ein weiteres Umlenkstück (11e,74) entweder sich nach innen erstreckend auf dem äußeren Ring (11) oder sich nach außen erstreckend auf dem Käfig (20) auf der Seite kleinen Durchmessers angeordnet ist.

3. Zweireihiges Kugellager gemäß Anspruch 1 oder 2, bei welchem eine axiale Stirnseite auf einer Seite der Lauffläche (11a) mit großem Durchmesser des äußeren Ringelements (11) axial nahe an der Seite der Lauffläche (13b) kleinen Durchmessers des inneren Ringelements (13) angeordnet ist, verglichen mit einer axialen Stirnseite auf einer Seite der Lauffläche (13a) großen Durchmessers des inneren Ringelements (13).

4. Doppelreihiges Kugellager gemäß Anspruch 3, bei welchem eine Wirkungslinie eines Lagerbereichs auf der Seite der Lauffläche großen Durchmessers in Richtung eines Lagerbereichs auf einer Seite der Lauffläche kleinen Durchmessers geneigt ist.

## Revendications

1. Roulement à billes à double rangée (10), comprenant :
un élément de bague intérieure (13) comportant des surfaces de piste de roulement (13a, 13b) avec des diamètres différents sur un côté de grand diamètre et sur un côté de petit diamètre ;
un élément de bague extérieure (11) qui est disposé de façon concentrique par rapport audit élément de bague intérieure (13) et qui comporte des surfaces de piste de roulement (11a, 11b) avec des diamètres différents sur le côté de grand diamètre et sur le côté de petit diamètre, correspondant à chaque surface de piste de roulement (13a, 13b) dudit élément de bague intérieure (13) ;
des billes en double rangée (17, 18) qui sont disposées entre les surfaces de piste de roulement respectives (11a, 11b, 13a, 13b) dudit élément de bague intérieure (13) et dudit élément de bague extérieure (11) ; et
des cages (19, 20) sur le côté de grand diamètre et sur le côté de petit diamètre pour supporter lesdites billes (17, 18) dans chaque rangée,
dans lequel la cage (20) sur le côté de petit diamètre parmi lesdites cages (19, 20) comprend une partie de poche (19a, 20a) pour supporter lesdites billes (15, 16), et une partie annulaire (19b, 20b) formée d'un seul tenant avec cette partie de poche (19a, 20a), et
dans lequel ladite partie annulaire (20b) de ladite cage (20) sur le côté de petit diamètre est disposée entre une partie d'épaulement dudit élément de bague intérieure (13) et une partie d'épaulement dudit élément de bague extérieure (13) avec un espacement respectif (δ1, δ2) ayant une fine dimension radiale établie de façon à être supérieure à "0" et inférieure ou égale à 0,15 fois un diamètre des billes (17) et (18), de façon à contrôler la quantité d'huile devant être délivrée dans l'espace annulaire (A) entre l'élément de bague intérieure (13) et l'élément de bague extérieure (11),
**caractérisé en ce que** la partie annulaire (20b) de la cage (20) sur le côté de petit diamètre est munie d'un morceau d'écran (20c, 75) s'étendant vers la bague intérieure, alors que la cage (19) sur le côté de grand diamètre n'est pas munie d'un morceau d'écran annulaire dans sa partie annulaire (19b) et est largement ouverte afin de définir un espace de décharge annulaire (65).

2. Roulement à billes à double rangée selon la revendication 1, dans lequel un autre morceau d'écran (11e, 74) est disposé soit à l'intérieur, s'étendant sur la bague extérieure (11), soit à l'extérieur, s'étendant sur la cage (20), sur le côté de petit diamètre.

3. Roulement à billes à double rangée selon la revendication 1 ou 2, dans lequel une face d'extrémité axiale sur un côté de la surface de piste de roulement (11a) avec un grand diamètre dudit élément de bague extérieure (13b) est positionnée à proximité axiale du côté de la surface de piste de roulement (13b) avec un petit diamètre dudit élément de bague intérieure (13) par rapport à une face d'extrémité axiale d'un côté de la surface de piste de roulement (13a) avec un grand diamètre dudit élément de bague intérieure (13).

4. Roulement à billes à double rangée selon la revendication 3, dans lequel une ligne d'action d'une partie de roulement sur le côté de la surface de piste de roulement avec un grand diamètre est inclinée vers une partie de roulement sur un côté de la surface de piste de roulement avec un petit diamètre.
